# EUROPEAN PATENT APPLICATION

(11) **EP 4 804 364 A1**
(43) Date of publication of application: **09.09.2026**
(21) Application number: 25162094.4
(22) Date of filing: 06.03.2025
(51) Int. Cl.: H02J 3/00, G06N 3/08

(54) **RISK ASSESSMENT OF ROTOR ANGLE INSTABILITY IN A POWER NETWORK**

(71) Applicant: Hitachi Energy Ltd, 8050 Zürich (CH)
(72) Inventor: POLAND, Jan, 5415 Nussbaumen (CH); PAN, Jiuping, Raleigh, North Carolina, 27606 (US); NUQUI, Reynaldo, Cary, North Carolina, 27513 (US); RIPAMONTI, Nicolo, 5430 Wettingen (CH); BERGGREN, Bertil, 722 10 Västerås (SE); KRZYSIAK, Janina, 30126 Krakow (PL)
(74) Representative: Vossius & Partner Patentanwälte Rechtsanwälte mbB

(57) **Abstract**

Rotor angle instability is a key criterion of dynamic stability in power networks. State-of-the-art machine-learning approaches are difficult to scale and have limited inputs with which to make predictions as to rotor angle instability. Accordingly, disclosed embodiments utilize a machine-learning model that is applied to bus voltage angles, which are local quantities available at every bus in the power network, to derive a prediction of the risk of rotor angle stability in the power network. These predictions may be biased in order to avoid false negatives. The machine-learning model may be a message-passing neural network. The resulting predictor is capable of quickly and reliably flagging potential rotor instability within a power network.

## Description

### BACKGROUND

### Field of the Invention

The embodiments described herein are generally directed to machine learning, and, more particularly, to assessing the risk of angle instability in a power network using machine learning.

### Description of the Related Art

Rotor angle stability refers to the stability of the rotor angles of the synchronous machines in a power network that has undergone a disturbance. A synchronous machine is an electrical machine that converts mechanical energy into electrical energy, or vice versa. The rotor angle of a synchronous machine refers to the angular position of the rotor, relative to a stationary reference frame, essentially representing the angle between the magnetic axis of the rotor and the rotating magnetic field produced by the stator, and directly impacting the power output of the machine. In the event of rotor angle stability, all rotor angles remain essentially synchronized during the disturbance. In other words, the relative differences between the rotor angles may oscillate, but will remain below a defined maximum value (e.g., 180 degrees). In contrast, in the event of rotor angle instability, the relative difference of at least one rotor angle exceeds the defined maximum value. In this case, the synchronous machine, for which the relative difference of the rotor angle exceeds the maximum value, is said to be reaching an "out-of-step" condition during the transient.

The state of the art in the assessment of rotor angle stability consists of three different approaches: direct; time domain dynamic security assessment (DSA) simulations; and machine learning (ML). Direct approaches establish theoretically motivated criteria to assess stability, and are only applicable to a very narrow range of power networks. Time domain DSA simulations are the preferred approach when high accuracy in the stability assessment is required, but have a high computational cost. Recently, High Performance Computing (HPC) has been proposed to mitigate the computational burden.

Machine-learning approaches, which are limited in the art, build predictors for rotor angle stability, but are difficult to scale for large power networks (e.g., thousands of buses). In addition, state-of-the-art machine-learning approaches only accept, as inputs, the current operating state of the power network and a specification of the contingency to be assessed. The current operating state of a power grid is typically derived by a state estimator, implemented, for example, in a supervisory control and data acquisition (SCADA) system or energy management system (EMS), and comprises the balances of active and reactive power at each bus, the complex voltages at each bus, and the network topology. The contingency is typically one or more faults, followed by the tripping of a power line, generator, transformer, or other asset in the power network. As an example, I. Konstantelos et al., "Implementation of a Massively Parallel Dynamic Security Assessment Platform for Large-Scale Grids," in IEEE Transactions on Smart Grid, vol. 8, no. 3, pp. 1417-1426, May 2017, describes one approach to dynamic stability prediction based on the operating state and contingency to be assessed, in which a decision tree is trained for each contingency. As another example, U.S. Patent Pub. No. 2016/0084919A1 predicts the risk of rotor angle instability locally, based on the measured derivative of the rotor angle. As a further example, CN110994604A uses an artificial neural network and long short-term memory (LSTM) on time series, to predict rotor angle instability.

What is needed is a risk assessment of rotor angle instability that is capable of quickly and reliably flagging potential rotor instability, with zero false negatives, for even unstable cases that are not directly reflected in the training dataset. The risk assessment should also be efficient (e.g., less than a 10% rate of false positives) and scalable for power networks with thousands of buses.

### SUMMARY

Accordingly, systems, methods, and non-transitory computer-readable media are disclosed for assessing the risk of rotor angle instability in a power network. For buses without a synchronous machine, angle stability is not natively defined. However, rotor angle stability can be assessed by analyzing the difference between bus voltage angles in a power system, since this difference between bus voltage angles directly reflects the relative rotor angle between generators. Thus, embodiments may consider a bus voltage trajectory to be unstable if and only if a criterion (e.g., post-fault root mean square error) exceeds a predefined threshold, which may be defined by the separating limit between synchronous machines with rotor angle stability and synchronous machines with rotor angle instability within a simulation dataset.

In an embodiment, a method of facilitating angle stability in a power network comprises using at least one hardware processor to: during a training phase, generate a training dataset that comprises a plurality of training records, wherein each of the plurality of training records corresponds to an operating point and comprises, for each of a plurality of buses in the power network, a value of each of one or more parameters at that bus and a label indicating whether that bus is angularly stable or unstable for the corresponding operating point, wherein the training dataset includes one or more training records for each of a plurality of operating points with one or more contingencies, and use the training dataset to train a machine-learning model to output an indicator of angle instability at each of at least a subset of the plurality of buses; and during an operation phase, for each of one or more sets of operating points for the power network, execute the machine-learning model to determine the indicator of angle instability at each of the at least a subset of the plurality of buses for the set of operating points, wherein each of the one or more sets of operating points comprises one or more variations and/or one or more contingencies that are relevant to assessing the angle instability in the power network.

The method may further comprises using the at least one hardware processor to, during the operation phase, for each of the one or more sets of operating points, determine whether or not to execute a dynamic security assessment for the set of operating points based on the determined indicators of angle instability at the at least a subset of the plurality of buses. The method may further comprises using the at least one hardware processor to, when determining to execute the dynamic security assessment for the set of operating points, determine a portion of the power network that is at risk of being unstable based on the determined indicators of angle instability for at least a subset of the plurality of buses.

The one or more parameters may comprise one or more of complex power, complex voltage, or a status of at least one adjacent line. The plurality of buses may comprise all buses in the power network.

The indicator of angle instability may be an indicator of voltage angle instability. The indicator of angle instability may comprise a quantity derived from a difference between a voltage angle trajectory and a post-fault steady-state voltage angle. The quantity may comprise a logarithm of the post-fault root mean square error for each of the plurality of buses, calculated for a time interval [*t*₁, *t_{end}*] as: $\frac{1}{2} log {\int }_{{t}_{1}}^{{t}_{end}} {\left(θ\left(t\right)-{θ}_{pfss}\right)}^{2} dt$ wherein *θ* is a voltage angle for the bus, *θ_{pfss}* is a post-fault steady-state voltage angle for the bus, and t is time.

The method may further comprise determining a global indicator of angle instability based on the determined indicators of angle instability at the plurality of buses, and wherein determining whether or not to execute the dynamic security assessment comprises: determining to execute the dynamic security assessment for the set of operating points when the determined global indicator of angle instability satisfies a predefined threshold; and determining not to execute the dynamic security assessment for the set of operating points when the determined global indicator of angle instability does not satisfy the predefined threshold. The method may further comprises using the at least one hardware processor to, when determining to execute the dynamic security assessment for the set of operating points, execute the dynamic security assessment to determine whether or not the power network is unstable given the set of operating points. The method may further comprise using the at least one hardware processor to, after executing the dynamic security assessment for the set of operating points, when the dynamic security assessment determines that the power network is unstable given the set of operating points, control one or more components of the power network to mitigate instability in the power network. Controlling one or more components of the power network to mitigate instability in the power network may comprise one or more of shedding one or more loads, re-dispatching one or more power generators, tripping one or more power generators, reconfiguring a topology of the power network, or adjusting one or more setpoints of the one or more components. The predefined threshold may be set according to an extreme of the global indicator of angle instability during one or more simulations. The predefined threshold may be set according to both the extreme of the global indicator of angle instability during the one or more simulations and a buffer amount, such that the determination of whether or not to execute the dynamic security assessment is a one-sided prediction that avoids false negatives.

The machine-learning model may comprise a message-passing neural network, wherein each of the plurality of training records comprises a nodal tensor that has a nodal dimension, representing the plurality of buses, and a feature dimension, representing the value of each of the one or more parameters at each of the plurality of buses. The one or more sets of operating points may comprise a current set of operating points, representing the operating points at a current time. The one or more sets of operating points may comprise a forecasted set of operating points, representing the operating points forecasted for a future time.

It should be understood that any of the features in the methods above may be implemented individually or with any subset of the other features in any combination. Thus, to the extent that the appended claims would suggest particular dependencies between features, disclosed embodiments are not limited to these particular dependencies. Rather, any of the features described herein may be combined with any other feature described herein, or implemented without any one or more other features described herein, in any combination of features whatsoever. In addition, any of the methods, described above and elsewhere herein, may be embodied, individually or in any combination, in executable software modules of a processor-based system, such as a server, in a computer program product, and/or in executable instructions stored in a non-transitory computer-readable medium.

### BRIEF DESCRIPTION OF THE DRAWINGS

The details of the present invention, both as to its structure and operation, may be gleaned in part by study of the accompanying drawings, in which like reference numerals refer to like parts, and in which:
FIG. 1 illustrates an example infrastructure, in which any of the processes described herein may be implemented, according to an embodiment;
FIG. 2 illustrates an example processing system, by which any of the processes described herein may be executed, according to an embodiment;
FIG. 3 illustrates an example data flow for the risk assessment of rotor angle instability, according to an embodiment;
FIG. 4 illustrates an example training process for a machine-learning model, according to an embodiment;
FIG. 5 illustrates an example process for generating a training dataset, according to an embodiment;
FIG. 6 illustrates an example structure of a training dataset, according to an embodiment;
FIG. 7 illustrates an example operating process for a machine-learning model, according to an embodiment;
FIG. 8 illustrates an example indicator of angle stability, according to an embodiment;
FIGS. 9A and 9B illustrate histograms of an example indicator of angle stability at the bus level and network level, respectively, according to an embodiment; and
FIGS. 10A-10C illustrate an architecture of a message-passing neural network, according to embodiments of a machine-learning model.

### DETAILED DESCRIPTION

In an embodiment, systems, methods, and non-transitory computer-readable media are disclosed for assessing the risk of rotor angle instability in a power network. After reading this description, it will become apparent to one skilled in the art how to implement the invention in various alternative embodiments and alternative applications. However, although various embodiments of the present invention will be described herein, it is understood that these embodiments are presented by way of example and illustration only, and not limitation. As such, this detailed description of various embodiments should not be construed to limit the scope or breadth of the present invention as set forth in the appended claims.

### 1. Infrastructure

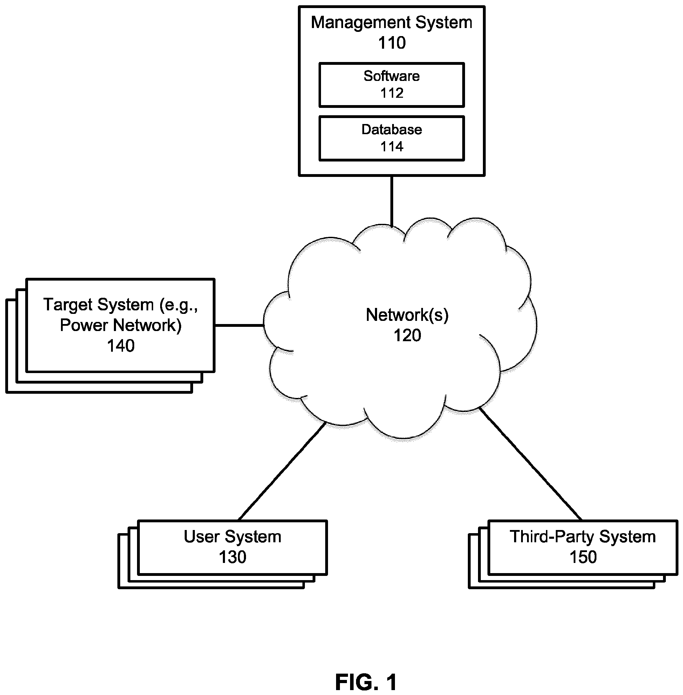

FIG. 1 illustrates an example infrastructure in which any of the disclosed processes may be implemented, according to an embodiment. The infrastructure may comprise a management system 110 (e.g., comprising one or more servers) that hosts and/or executes one or more of the various processes described herein, which may be implemented in software and/or hardware. Examples of management system 110 include, without limitation, a supervisory control and data acquisition (SCADA) system, a power management system (PMS), an energy management system (EMS), a distribution management system (DMS), an advanced DMS (ADMS), an asset management system (ASM), and the like. Management system 110 may comprise dedicated servers, or may instead be implemented in a computing cloud, in which the computational resources of one or more servers are dynamically and elastically allocated to multiple tenants based on demand. In either case, the servers may be collocated (e.g., in a single data center) and/or geographically distributed (e.g., across a plurality of data centers). Management system 110 may also comprise or be communicatively connected to software 112 and/or a database 114. In addition, management system 110 may be communicatively connected, via one or more networks 120, to one or more user systems 130, target systems 140, and/or third-party systems 150.

Network(s) 120 may comprise the Internet, and management system 110 may communicate with user system(s) 130, target system(s) 140, and/or third-party system(s) 150, through the Internet and/or other network using standard transmission protocols, such as HyperText Transfer Protocol (HTTP), HTTP Secure (HTTPS), File Transfer Protocol (FTP), FTP Secure (FTPS), Secure Shell FTP (SFTP), eXtensible Messaging and Presence Protocol (XMPP), Open Field Message Bus (OpenFMB), IEEE Smart Energy Profile Application Protocol (IEEE 2030.5), and the like, as well as proprietary protocols. While management system 110 is illustrated as being connected to various systems through a single set of network(s) 120, it should be understood that management system 110 may be connected to the various systems via different sets of one or more networks. For example, management system 110 may be connected to a subset of user systems 130, target systems 140, and/or third-party systems 150 via the Internet, but may be connected to one or more other user systems 130, target systems 140, and/or third-party systems 150 via an intranet. Furthermore, while only a few user systems 130, target systems 140, and third-party systems 150, one instance of software 112, and one database 114 are illustrated, it should be understood that the infrastructure may comprise any number of user systems 130, target systems 140, third-party systems 150, software instances 112, and databases 114.

User system(s) 130 may comprise any type or types of computing devices capable of wired and/or wireless communication, including without limitation, desktop computers, laptop computers, tablet computers, smart phones or other mobile phones, servers, game consoles, televisions, set-top boxes, electronic kiosks, point-of-sale terminals, embedded controllers, programmable logic controllers (PLCs), and/or the like. However, it is generally contemplated that user system(s) 130 would comprise personal computers, mobile devices, or workstations by which agents of an operator of a target system 140 can interact with management system 110. These interactions may comprise inputting data (e.g., parameters for configuring the processes described herein) and/or receiving data (e.g., the outputs of processes described herein) via a graphical user interface provided by management system 110 or a system between management system 110 and user system(s) 130. The graphical user interface may comprise screens (e.g., webpages) that include a combination of content and elements, such as text, images, videos, animations, references (e.g., hyperlinks), frames, inputs (e.g., textboxes, text areas, checkboxes, radio buttons, drop-down menus, buttons, forms, etc.), scripts (e.g., JavaScript), and the like, including elements comprising or derived from data stored in database 114.

Target system(s) 140 may comprise any type of system for which data are monitored, analyzed, and/or acted upon. However, in the context of specific, non-limiting examples that are provided throughout the present disclosure, it will be assumed that target system 140 comprises or consists of a power system. A power system may be a power network in which a plurality of power assets, represented as a plurality of respective buses, are connected, as nodes in a network, by edges representing power lines. A bus may be an electrical substation within the power system that contains transformers to step up or step down voltages, and circuit breakers to manage power flows between different circuits. The power network may be a power distribution network, a power transmission network, and/or the like. The power assets may comprise power resources, such as power generators, energy storage systems, electrical loads (e.g., rechargeable energy storage system or other controllable load, non-controllable load, etc.), and/or the like, as well as other types of power assets, such as transformers, circuit breakers, inverters, branches or other lines, and/or any other electrical component supporting the power system. Power generators may comprise different types of power generators, such as thermal power plants (e.g., coal, natural gas, nuclear, geothermal, etc.), hydroelectric power plants, renewable resource power plants (e.g., solar, wind, geothermal, etc.), and/or the like. Electrical loads may comprise anything that consumes power, including, without limitation, electric vehicles, appliances, machines, commercial buildings, residential buildings, and/or the like.

Third-party system(s) 150 may comprise any type or types of computing devices capable of wired and/or wireless communication. However, it is generally contemplated that third-party system 150 would comprise one or more servers that supply extrinsic data to management system 100. The extrinsic data may represent historical, current, and/or forecasted values of one or more parameters, relevant to target system 140, such as weather parameters (e.g., temperature, humidity, wind speed, pressure, etc.), market parameters (e.g., energy prices), socio-political events (e.g., protests, law-enforcement warnings, etc.) and/or the like.

Management system 110 may execute software 112, comprising one or more software modules that implement one or more of the disclosed processes. In addition, management system 110 may comprise, be communicatively coupled with, or otherwise have access to database 114 that stores the data input into and/or output from one or more of the disclosed processes. Any suitable database may be utilized in database 114, including without limitation MySQL^{™}, Oracle^{™}, IBM^{™}, Microsoft SQL^{™}, Access^{™}, PostgreSQL^{™}, MongoDB^{™}, and/or the like, and including cloud-based databases, proprietary databases, and unstructured databases.

### 2. Example Processing Device

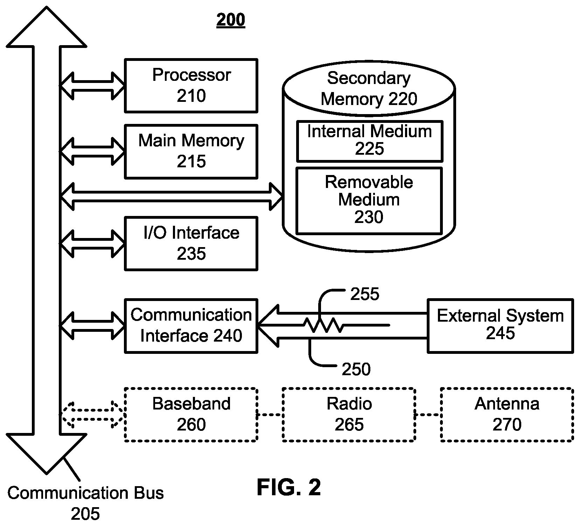

FIG. 2 is a block diagram illustrating an example wired or wireless system 200 that may be used in connection with various embodiments described herein. For example, system 200 may be used as or in conjunction with one or more of the functions, methods, or other processes (e.g., to store and/or execute software 112, store database 114, etc.) described herein, and may represent components of management system 110, user system(s) 130, target system(s) 140, third-party system(s) 150, and/or other processing devices described herein. System 200 can be a server, conventional personal computer, or any other processor-enabled device that is capable of wired or wireless data communication. Other computer systems and/or architectures may be also used, as will be clear to those skilled in the art.

System 200 preferably includes one or more processors 210. Processor(s) 210 may comprise a central processing unit (CPU). Additional processors may be provided, such as a graphics processing unit (GPU), an auxiliary processor to manage input/output, an auxiliary processor to perform floating-point mathematical operations, a special-purpose microprocessor having an architecture suitable for fast execution of signal-processing algorithms (e.g., digital-signal processor), a processor subordinate to the main processor (e.g., back-end processor), an additional microprocessor or controller for dual or multiple processor systems, and/or a coprocessor. Such auxiliary processors may be discrete processors or may be integrated with a main processor 210. Examples of processors 210 which may be used with system 200 include, without limitation, any of the processors (e.g., Pentium^{™}, Core i7^{™}, Xeon^{™}, etc.) available from Intel Corporation of Santa Clara, California, any of the processors available from Advanced Micro Devices, Incorporated (AMD) of Santa Clara, California, any of the processors (e.g., A series, M series, etc.) available from Apple Inc. of Cupertino, any of the processors (e.g., Exynos^{™}) available from Samsung Electronics Co., Ltd., of Seoul, South Korea, any of the processors available from NXP Semiconductors N.V. of Eindhoven, Netherlands, and/or the like.

Processor 210 may be connected to a communication bus 205. Communication bus 205 may include a data channel for facilitating information transfer between storage and other peripheral components of system 200. Furthermore, communication bus 205 may provide a set of signals used for communication with processor 210, including a data bus, address bus, and/or control bus (not shown). Communication bus 205 may comprise any standard or non-standard bus architecture such as, for example, bus architectures compliant with industry standard architecture (ISA), extended industry standard architecture (EISA), Micro Channel Architecture (MCA), peripheral component interconnect (PCI) local bus, standards promulgated by the Institute of Electrical and Electronics Engineers (IEEE), including IEEE 488 general-purpose interface bus (GPIB) or IEEE 696/S-100, and/or the like.

System 200 may comprise a main memory 215. Main memory 215 provides storage of instructions and data for programs executing on processor 210, such as one or more of the processes discussed herein (e.g., embodied in software 112). It should be understood that programs stored in the memory and executed by processor 210 may be written and/or compiled according to any suitable language, including without limitation C/C++, Java, JavaScript, Perl, Visual Basic, .NET, and the like. Main memory 215 is typically semiconductor-based memory such as dynamic random access memory (DRAM) and/or static random access memory (SRAM). Other semiconductor-based memory types include, for example, synchronous dynamic random access memory (SDRAM), Rambus dynamic random access memory (RDRAM), ferroelectric random access memory (FRAM), and the like, including read only memory (ROM).

System 200 may also comprise a secondary memory 220. Secondary memory 220 may optionally include an internal medium 225 and/or a removable medium 230. Internal medium 225 may comprise, for example, a hard disk drive (HDD), a solid state drive (SSD), and/or the like. Removable medium 230 may comprise, for example, a magnetic tape drive, a compact disc (CD) drive, a digital versatile disc (DVD) drive, a flash memory drive, and/or the like. Secondary memory 220 is a non-transitory computer-readable medium having computer-executable code (e.g., software 112) and/or other data stored thereon. The computer software or data stored on secondary memory 220 is read into main memory 215 for execution by processor 210.

System 200 may comprise an input/output (I/O) interface 235. I/O interface 235 provides an interface between one or more components of system 200 and one or more input and/or output devices. Example input devices include, without limitation, sensors, keyboards, touch screens or other touch-sensitive devices, cameras, biometric sensing devices, computer mice, trackballs, pen-based pointing devices, and/or the like. Examples of output devices include, without limitation, other processing devices, cathode ray tubes (CRTs), plasma displays, light-emitting diode (LED) displays, liquid crystal displays (LCDs), printers, vacuum fluorescent displays (VFDs), surface-conduction electron-emitter displays (SEDs), field emission displays (FEDs), and/or the like. In some cases, an input and output device may be combined, such as in the case of a touch panel display (e.g., in a smartphone, tablet, or other mobile device).

System 200 may comprise a communication interface 240. Communication interface 240 allows software and other data to be transferred between system 200 and external devices, networks, or other external systems 245. For example, data, which may include computer software or executable code, may be transferred to system 200 from external system 245 (e.g., a network server, personal computer, or other device) and/or from system 200 to external system 245, via communication interface 240. Examples of communication interface 240 include a built-in network adapter, network interface card (NIC), Personal Computer Memory Card International Association (PCMCIA) network card, card bus network adapter, wireless network adapter, Universal Serial Bus (USB) network adapter, modem, a wireless data card, a communications port, an infrared interface, an IEEE 1394 fire-wire, and any other device capable of interfacing system 200 with a network (e.g., network(s) 120) or another computing device. Communication interface 240 preferably implements industry-promulgated protocol standards, such as Ethernet IEEE 802 standards, Fiber Channel, digital subscriber line (DSL), asynchronous digital subscriber line (ADSL), frame relay, asynchronous transfer mode (ATM), integrated services digital network (ISDN), personal communications services (PCS), transmission control protocol/Internet protocol (TCP/IP), serial line Internet protocol/point to point protocol (SLIP/PPP), and so on, but may also implement customized or non-standard interface protocols as well.

Data transferred via communication interface 240 are generally in the form of electrical communication signals 255. These signals 255 may be provided to communication interface 240 via a communication channel 250. In an embodiment, communication channel 250 may be a wired or wireless network (e.g., network(s) 120), or any variety of other communication links. Communication channel 250 carries signals 255 and can be implemented using a variety of wired or wireless communication means including wire or cable, fiber optics, conventional phone line, cellular phone link, wireless data communication link, radio frequency ("RF") link, or infrared link, just to name a few.

Computer programs (e.g., comprised in software 112), comprising computer-executable code or instructions, are stored in main memory 215 and/or secondary memory 220. Computer programs can also be received via communication interface 240 and stored in main memory 215 and/or secondary memory 220. The computer programs, when executed, enable system 200 to perform one or more of the processes described elsewhere herein.

In this description, the term "computer-readable medium" is used to refer to any non-transitory computer-readable storage media used to provide computer-executable code and/or other data to or within system 200. Examples of such media include main memory 215, secondary memory 220 (including internal memory 225 and/or removable medium 230), and any peripheral device communicatively coupled with communication interface 240, such as external system 245. These non-transitory computer-readable media are means for providing executable code, programming instructions, software, and/or other data to processor(s) 210.

System 200 may also include optional wireless communication components that facilitate wireless communication over a voice network and/or a data network (e.g., in the case of user system 130 that is a smart phone or other mobile device, a sensor and/or actuator within a target system 140, etc.). The wireless communication components may comprise an antenna system 270, a radio system 265, and a baseband system 260. In system 200, radio frequency (RF) signals are transmitted and received over the air by antenna system 270 under the management of radio system 265.

In an embodiment, antenna system 270 may comprise one or more antennae and one or more multiplexors (not shown) that perform a switching function to provide antenna system 270 with transmit and receive signal paths. In the receive path, received RF signals can be coupled from a multiplexor to a low noise amplifier (not shown) that amplifies the received RF signal and sends the amplified signal to radio system 265.

In an alternative embodiment, radio system 265 may comprise one or more radios that are configured to communicate over various frequencies. In an embodiment, radio system 265 may combine a demodulator (not shown) and modulator (not shown) in one integrated circuit (IC). The demodulator and modulator can also be separate components. In the incoming path, the demodulator strips away the RF carrier signal leaving a baseband receive signal, which is sent from radio system 265 to baseband system 260.

Baseband system 260 is also communicatively coupled with processor(s) 210, which may have access to data storage areas 215 and 220. Thus, data, including computer programs, can be received from baseband processor 260 and stored in main memory 210 or in secondary memory 220, or executed upon receipt. Such computer programs, when executed, may enable system 200 to perform one or more of the disclosed processes.

### 3. Example Data Flow for Target System Management

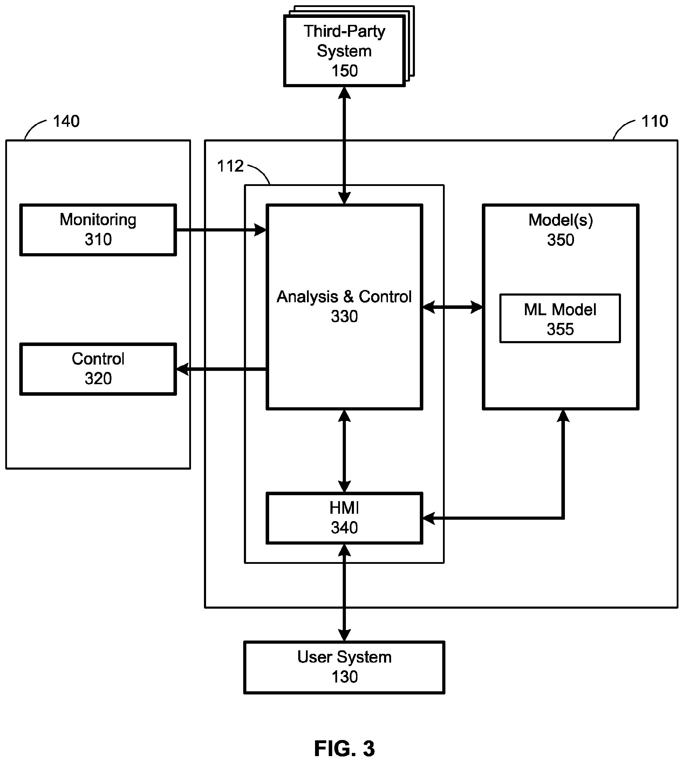

FIG. 3 illustrates an example data flow between a management system 110, a user system 130, a target system 140, and one or more third-party systems 150, according to an embodiment. Target system 140 may comprise a monitoring module 310 and a control module 320. Software 112 of management system 110 may comprise an analysis and control module 330, and a human-to-machine interface (HMI) 340. Analysis and control module 330 may interact with or comprise one or more models 350, which may be stored in database 114 of management system 110. It should be understood that communications between the various systems may be performed via network(s) 120. In addition, communications between a pair of modules may be performed via an application programming interface (API) provided by one of the modules or by other interprocess communication means.

Monitoring module 310 may monitor and collect data that are output by one or more sensors in target system 140 (e.g., sensors in the power network of a power system). In addition, monitoring module 310 may otherwise derive data from the collected data. Monitoring module 310 may transmit or "push" the collected and/or otherwise derived data as system telemetry to analysis and control module 330 (e.g., via an API of analysis and control module 330). Alternatively, analysis and control module 330 may retrieve or "pull" the system telemetry from monitoring module 310 (e.g., via an API of monitoring module 310). The system telemetry may include measurements at each of one or more nodes (e.g., buses within a power network) or other points within a network of target system 140. The system telemetry may be communicated from monitoring module 310 to analysis and control module 330 in real time, as data are collected and/or otherwise derived, or periodically. As used herein, the terms "real time" or "real-time" include events that occur simultaneously, as well as events that are separated in time by ordinary delays resulting from latencies in processing, memory access, communications, and/or the like.

Analysis and control module 330 may receive the system telemetry from monitoring module 310, use the system telemetry in conjunction with at least one of model(s) 350 to determine a configuration for target system 140 (e.g., one or more resources or other power assets in a power system), and then control target system 140 to transition to the determined configuration. In particular, analysis and control module 330 may generate control signals that are transmitted to control module 320 of target system 140. For example, the control signals may be sent via an API of control module 320. The control signals may be communicated from analysis and control module 330 of management system 110 to control module 320 of target system 140 in real time, as the system telemetry is received and analyzed, periodically (e.g., in advance of a sliding time window), or in response to a user operation. Analysis and control module 330 may control target system 140 automatically (e.g., without any user intervention), semi-automatically (e.g., requiring user approval or confirmation), and/or in response to manual user inputs (e.g., via human-to-machine interface 340).

Each third-party system 150 may supply extrinsic data to analysis and control module 330. Third-party system 150 may transmit or push the extrinsic data to analysis and control module 330 (e.g., via an API of analysis and control module 330). Alternatively, analysis and control module 330 may retrieve or pull the extrinsic data from third-party system 150 (e.g., via an API of third-party system 150). The extrinsic data may include any data that are utilized by analysis and control module 330 and that are not available from an intrinsic source, such as monitoring module 310 or database 114. The extrinsic data may comprise or consist of data that are exogenous to target system 140. In the context of target system 140 being a power system, the exogenous data may comprise one or more historical and/or forecast weather parameters, such as temperature, humidity, solar insolation, wind, barometric pressure, precipitation, alerts, and/or the like. In this case, third-party system 150 may comprise a weather service, such as the United States National Weather Service. As another example, the extrinsic data may comprise one or more historical and/or forecast market parameters, such as an energy price in a primary or ancillary services market. In this case, third-party system 150 may comprise an energy market in which energy is traded.

Analysis and control module 330 may receive intrinsic data from monitoring module 310 and/or database 114 and/or receive extrinsic data from one or more third-party systems 150, and derive the value of each of one or more input features from the received intrinsic and/or extrinsic data. The received data may itself comprise the value of an input feature, or the value of an input feature may be otherwise derived (e.g., calculated, inferred, interpolated, imputed, etc.) from the received data. Analysis and control module 330 may input the values of the input features into at least one of model(s) 350 (e.g., machine-learning model 355), which may output values of a target.

Analysis and control module 330 may make decisions and/or perform operations on target system 140, based on the value of the target output by model(s) 350. As an example, analysis and control module 330 may utilize the value of the target to determine an optimal configuration of target system 140 at some future time. Based on this determination, analysis and control module 330 may automatically (i.e., without any user involvement), semi-automatically (e.g., with user approval or confirmation via human-to-machine interface 340), or manually (e.g., in response to a manual user request via human-to-machine interface 340) initiate a control operation, to change a real-time or scheduled operation of target system 140, based on the optimal configuration. Initiation of the control operation may comprise transmitting control commands to control module 320 of target system 140, which may responsively control target system 140 according to the control commands.

Control module 320 of target system 140 receives the control signals from analysis and control module 330, and controls one or more components of target system 140 in accordance with the control signals. In the context of a power system, examples of such control include, without limitation, setting a setpoint (e.g., active and/or reactive power for power generators, voltage, etc.), adjusting the power output of a power generator, adjusting the charging or discharging of an energy storage system, adjusting the power input to a load, activating or deactivating a load, closing or opening a switch (e.g., circuit breaker), and/or the like.

Human-to-machine interface 340 may generate a graphical user interface that is transmitted to user system 130, and receive inputs to the graphical user interface via user system 130. The graphical user interface may provide information regarding the current state of target system 140 determined from the system telemetry, a predicted state (e.g., rotor angle stability or rotor angle instability) of target system 140 determined by analysis and control module 330, a configuration of target system 140 determined by analysis and control module 330, a control decision or recommendation for target system 140 determined by analysis and control module 330, and/or the like. In addition, the graphical user interface may provide inputs that enable a user of user system 130 to configure settings of analysis and control module 330, train, configure, test, and/or deploy model(s) 350, accept or reject decisions, or recommendations, specify, approve, and/or reject controls to be transmitted to control module 320 of target system 140, analyze target system 140, and/or the like.

Each of model(s) 350, which may comprise a machine-learning model 355, a system model of target system 140, and/or the like, may be stored as a data structure in database 114 and accessed by modules, such as analysis and control module 330, via any known means (e.g., via an API of database 114, a direct query of database 114, etc.). For example, a model 350 (e.g., machine-learning model 355) may be loaded into memory (e.g., 215 and/or 220) from database 114 and executed by management system 110 as a service (e.g., as a microservice) that is accessible to analysis and control module 330 via an API. Management system 110 may provide individual model(s) 350 for each target system 140 that is managed by management system 110, and/or a collective model 350 or set of models 350 that is used for two or more target systems 140.

### 4. Training

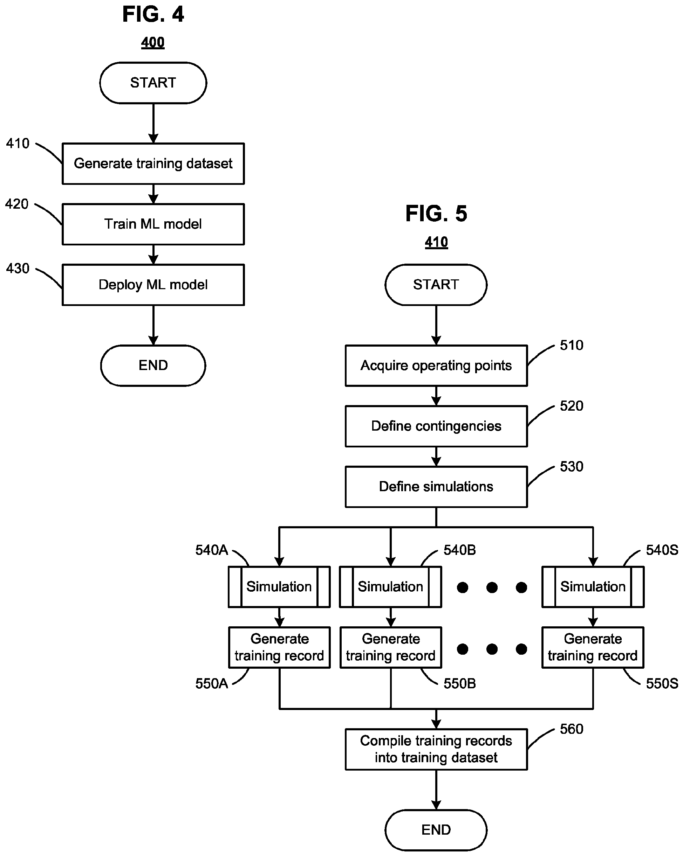

FIG. 4 illustrates an example training process 400 for machine-learning model 355, during a training phase (e.g., offline), according to an embodiment. Training process 400 may be implemented by software 112. While training process 400 is illustrated with a certain arrangement and ordering of subprocesses, training process 400 may be implemented with fewer, more, or different subprocesses and a different arrangement and/or ordering of subprocesses. In addition, it should be understood that any subprocess, which does not depend on the completion of another subprocess, may be executed before, after, and/or in parallel with that other independent subprocess, even if the subprocesses are described or illustrated in a particular order.

Initially, subprocess 410 may generate a training dataset. In particular, subprocess 410 may generate a training dataset that comprises a plurality of training records. Each of the plurality of training records may correspond to an operating point. An operating point comprises data representing the attributes of a power network, including, for example, numerical data at each of a plurality of buses in the power network (e.g., complex power, complex voltage, etc.) and/or topological data about the power network (e.g., buses and power lines, including any buses or power lines that are out of service). The plurality of buses may comprise all buses in the power network. In an embodiment, at least one of the plurality of buses does not represent a synchronous machine (e.g., whereas at least one other one of the plurality of buses does represent a synchronous machine). In the context of subprocess 410, the operating point may be a historical operating point or simulated operating point of the power network.

In an embodiment, each of the plurality of training records comprises, for each of a plurality of buses in the power network, a value of each of one or more parameters at that bus and a label indicating whether that bus is angularly stable or unstable for the corresponding operating point. The one or more parameters at each bus may comprise one or more of complex power (e.g., active and reactive power), complex voltage, or a status of at least one (e.g., every) adjacent line of the bus. The label may be a binary label that indicates either that the bus is angularly stable (e.g., a value of "1") or that the bus is angularly unstable (e.g., a value of "0"), in terms of voltage angle stability. At the bus level, the label may indicate whether or not the respective bus has voltage angle stability, as opposed, for example, to rotor angle stability, which would only apply to buses connected to synchronous machines.

The training dataset may include one or more training records for each of a plurality of operating points with each of one or more, and generally a plurality of, contingencies. In an embodiment, the plurality of operating points comprises a sampling of operating points that vary in terms of the numerical data at the plurality of buses and/or the topological data. In an embodiment, each of the plurality of operating points is considered for each of a plurality of contingencies. A contingency is a failure of at least one power asset in the power network, such as the failure of a power line, power generator, electrical load, transformer, Flexible Alternating Current Transmission System (FACTS) device, or the like. The plurality of contingencies may comprise all contingencies that may result in rotor angle instability within the power network and for which it is desired that machine-learning model 355 account.

The training dataset will typically be unbalanced. In particular, the training dataset may contain many more training records representing (e.g., labeled with) rotor angle stability than representing rotor angle instability, since rotor angle stability is the normal state of the power network. In this case, standard rebalancing techniques may be employed to increase the ratio of training records representing rotor angle instability, relative to training records representing rotor angle stability.

Subprocess 420 may use the training dataset, generated in subprocess 410, to train machine-learning model 355 to output an indicator of angle instability at each of at least a subset of the plurality of buses. In a preferred embodiment, machine-learning model 355 is trained to output the indicator of angle instability at each and every one of the plurality of buses. At the bus level, the indicator of angle instability may be an indicator of voltage angle instability.

Machine-learning model 355 may be trained, using the training dataset, in one or more supervised learning sessions. Machine-learning model 355 may comprise any machine-learning algorithm(s) that are capable of predicting the value of a target based on tabular data, such as a random forest algorithm, a gradient-boosting algorithm, a regression algorithm, a support vector machine, an artificial neural network, or the like. In a preferred embodiment discussed elsewhere herein, machine-learning model 355 is a message-passing neural network. The machine-learning algorithm may be trained, in any suitable manner, so as to minimize an error, according to a suitable loss function, between the output of the machine-learning algorithm for the training records and the respective labels of those training records. For example, for each training record in the training dataset, machine-learning model 355 may be executed, and an error, between the indicator of angle instability that is output by machine-learning model 355 for the training record and the true value of the indicator of angle instability in the training record, may be calculated according to the loss function. Subprocess 420 may also comprise validating and testing a performance metric of the machine-learning algorithm after training, as well as potentially retraining the machine-learning algorithm until a sufficient performance metric is achieved.

Subprocess 430 may deploy machine-learning model 355, after it has been sufficiently trained in subprocess 420. For instance, machine-learning model 355 may be deployed from a training or development environment to an operating or production environment. As an example, machine-learning model 355 may be deployed with an application programming interface that is accessible to other services executing on management system 110 (e.g., in a microservices architecture), such as analysis and control module 330. Alternatively, the machine-learning may be integrated into analysis and control module 330 and/or stored in database 114.

FIG. 5 illustrates an example of subprocess 410 for generating a training dataset, according to an embodiment. Process 410 may be implemented by software 112. While process 410 is illustrated with a certain arrangement and ordering of subprocesses, process 410 may be implemented with fewer, more, or different subprocesses and a different arrangement and/or ordering of subprocesses. In addition, it should be understood that any subprocess, which does not depend on the completion of another subprocess, may be executed before, after, and/or in parallel with that other independent subprocess, even if the subprocesses are described or illustrated in a particular order.

Subprocess 510 may acquire a plurality of operating points *OP*₁, *OP*₂, ..., *OP_{M}* for the power network being modeled. The plurality of operating points may comprise historical operating points (i.e., actual operating points of the power network observed in the past) and/or simulated operating points (e.g., generated via simulated operation of the power network). The plurality of operating points define the space over which the dynamic security assessment is to be conducted during the operation phase. Thus, collectively, the operating points should be sufficiently varied, in terms of network topology, so as to generalize over all possible, probable, or feasible topological variations.

As mentioned above, each of the plurality of operating points may comprise numerical data (e.g., complex power, complex voltage, etc.) for each of a plurality of buses in the power network and preferably for all of the plurality of buses in the power network, and/or topological data about the power network. In other words, each operating point is a snapshot of the power network. In an embodiment, each operating point is characterized by complex power (i.e., active and reactive power) of generation and load at each bus in the power network, complex voltages (i.e., amplitude and angle) at each bus in the power network, the operating state of each power asset (e.g., running or not running, in the case of a power generator), and the topology of the power network (e.g., operational status of power lines, transformers, and/or other power assets).

Subprocess 520 may define one or more contingencies for which machine-learning model 355 is to be trained to account. In an embodiment, a plurality of contingencies *C*₁, *C₂,* ..., *C_{N}* are defined. Again, the plurality of contingencies may comprise all contingencies that may result in rotor angle instability within the power network and for which it is desired that machine-learning model 355 account (e.g., all contingencies for which dynamic security assessment is to be performed). For example, a set of contingencies may be added that each represents the failure of a different one of the power lines in the power network, a set of contingencies may be added that each represents the failure of a different one of the generators in the power network, a set of contingencies may be added that each represents the failure of a different one of the loads in the power network, a set of contingencies may be added that each represents the failure of a different one of the transformers in the power network, a set of contingencies may be added that each represents the failure of a different one of the FACTS devices in the power network, and/or the like. The contingencies may be comprehensive in the sense that they may collectively cover the failure of every power asset (e.g., every node and/or edge) in the power network, every critical power asset in the power network, a representative sampling of the power assets in the power network, or the like. Essentially, every contingency for which dynamic risk assessment is desired should be included.

Subprocess 530 may define one or more simulations to be run on the operating points, acquired in subprocess 510, and the contingencies defined in subprocess 520. In general, subprocess 530 will define a plurality of simulations. Each simulation will be defined by a combination (*OPₘ, Cₙ*), *m* ∈ *M, n* ∈ *N,* of an operating point with a contingency. In a full factorial embodiment, subprocess 530 defines the Cartesian product of the operating points *OP*₁, *OP*₂, ..., *OP_{M}* and contingencies *C*₁, *C*₂, *..., C_{N},* such that there are *M* × *N* simulations (*OP*₁, *C*₁)*,* (*OP*₁, *C*₂), ..., (*OP*₁, *C_{N}*), (*OP*₂, *C*₁)*,* (*OP*₂*, C*₂), *...,* (*OP*₂, *C_{N}*), ..., (*OP_{M}, C*₁)*,* (*OP_{M}, C*₂), ..., (*OP_{M}, C_{N}*). Alternatively, subprocess 530 may define only some subset of all possible combinations. It should be understood that each simulation will be defined by an operating point (e.g., numerical and/or topological data) in which the contingency has occurred (e.g., failure of a power asset, for example, affecting the topology of the power network).

Simulations 540A, 540B, ..., 540S may be executed for each simulation that was defined in subprocess 530 (e.g., *S = M* × *N*)*.* As used herein, a reference numeral with an appended letter will be used to refer to a specific component, whereas the same reference numeral without any appended letter will be used to refer collectively to a plurality of the component or to refer to a generic or arbitrary instance of the component. Thus, for example, the term "simulations 540" refers collectively to simulations 540A, 540B, and 540S, and the term "simulation 540" may refer to any single one of simulations 540A, 540B, or 540S. Simulations 540 may be executed in parallel, serially, or both in parallel and serially (e.g., as serial batches, in which each simulation 540 is executed in parallel with the other simulations 540 in the same batch). Each simulation 540 may comprise a dynamic security assessment of the respective operating point with the respective contingency (*OPₘ, Cₙ*). The result R of each simulation 540 (i.e., dynamic security assessment) will be an indication of whether or not the power network is angularly stable (e.g., in terms of rotor angle stability), given the operating point and contingency (*OPₘ, Cₙ*). In an embodiment, the result R of each simulation will comprise, for each of the plurality of buses in the power network, an indicator of whether that bus is angularly stable or unstable (e.g., in terms of voltage stability). In practice, the vast majority of buses will generally remain stable, whereas a handful of buses will exhibit instability.

Subprocesses 550A, 550B, ..., 550S may generate a training record based on the result of each respective simulation 540A, 540B, ..., 540S. Each training record may comprise a representation of the operating point and contingency (*OPₘ, Cₙ*) and the result *R_{m,n}* (e.g., stable or unstable) of the respective simulation 540. Thus, each training record may be denoted as (*OPₘ, Cₙ*, *R_{m,n}*), which represents a trajectory of the power network. In the same manner as simulations 540, subprocesses 550 may be performed in parallel and/or serially.

Subprocess 560 may compile all of the training records, generated in subprocesses 550, into the training dataset. This training dataset may be stored as a simulation database, for example, within database 114, for subsequent use (e.g., in subprocess 420 of training process 400). Notably, the use of voltage stability at each of the plurality of buses drastically increases the size of the training dataset, relative to an alternative embodiment that only considers the global stability of the power network as a whole or only considers the rotor angle stability of buses with synchronous machines.

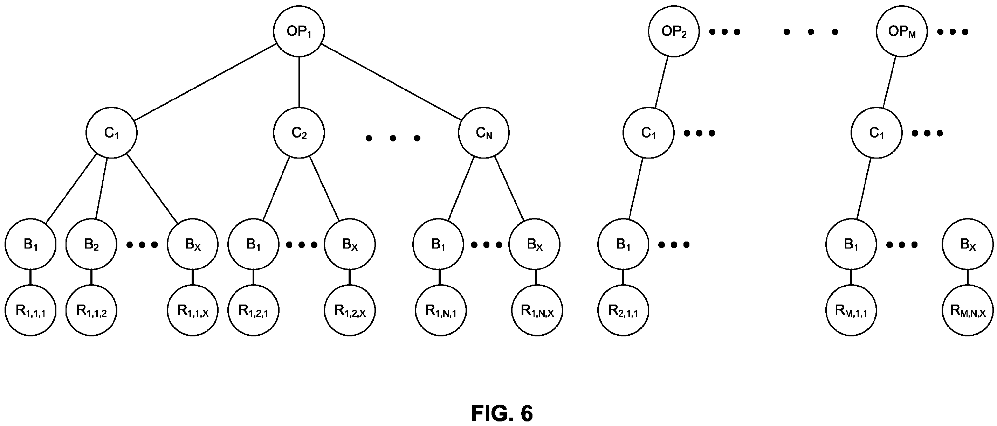

FIG. 6 illustrates an example structure of a training dataset, according to an embodiment. In the illustrated embodiment, the indication of angle instability (e.g., voltage angle instability) is provided at the level of each operating point, each contingency, and each bus in the power network. Thus, assuming that there are *X* buses in the power network, a result *R_{m,n,x}* (m ∈ *M, n* ∈ *N, x* ∈ *X*) is provided for each bus *Bₓ,* for each contingency *Cₙ*, and for each operating point *OPₘ*.

### 5. Operation

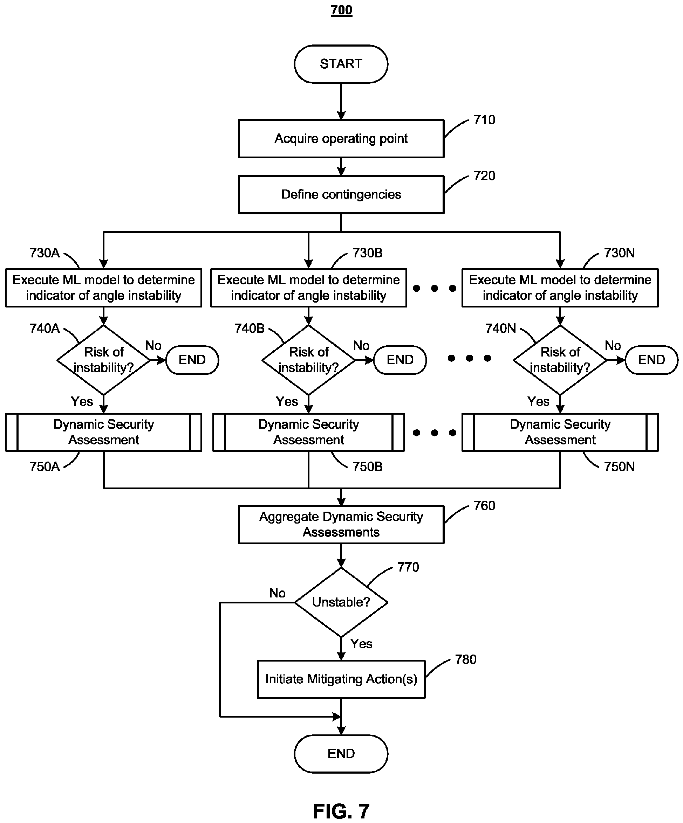

FIG. 7 illustrates an example operating process 700 for machine-learning model 355, during an operation phase (e.g., online), according to an embodiment. Operating process 700 may be implemented by software 112. While operating process 700 is illustrated with a certain arrangement and ordering of subprocesses, operating process 700 may be implemented with fewer, more, or different subprocesses and a different arrangement and/or ordering of subprocesses. In addition, it should be understood that any subprocess, which does not depend on the completion of another subprocess, may be executed before, after, and/or in parallel with that other independent subprocess, even if the subprocesses are described or illustrated in a particular order.

Subprocess 710 may acquire an operating point of the power network. This operating point may comprise the same information as the historical and/or simulated operating points that were used to train machine-learning model 355. For example, the operating point, acquired in subprocess 710, may comprise numerical data (e.g., complex power, complex voltage, etc.) for each of the plurality of buses in the power network, and/or topological data about the power network. This operating point may be any operating point for which a dynamic security assessment is desired. For example, the operating point may be the actual operating point of the power network at the current time (e.g., acquired from monitoring module 310 of target system 140). Alternatively, the operating point may be a forecasted or predicted operating point of the power network at a future time (e.g., forecasted by analysis and control module 330, using a model 350).

Subprocess 720 may define one or more contingencies for which a dynamic security assessment is desired. In an embodiment, the one or more contingencies are a plurality of contingencies. It should be understood that these may be the same plurality of contingencies as were defined in subprocess 520 of process 500 and/or may be defined in the same manner as described with respect to subprocess 520. In this case, subprocess 720 may comprise or consist of simply retrieving a plurality of predefined contingencies from memory (e.g., database 114).

In the event that there are a plurality of contingencies, defined in subprocess 720, the operating point, acquired in subprocess 710, may be paired with each of the plurality of contingencies to produce a set of operating points (*OP, C*₁)*,* (*OP, C*₂), ..., (*OP, C_{N}*). Thus, the set of operating points comprises one or more variations and/or one or more contingencies that are relevant to assessing the angle instability in the power network. In this context, the variation(s) may represent stochastic fluctuations in the operating conditions (e.g., fluctuations in load and renewable power generation) that are likely to occur and which should not cause the power network to become unstable, and/or different topological configurations of the power network (nodes and/or edges out of service).

In subprocess 730, machine-learning model 355, as trained and deployed in training process 400, may be executed to determine an indicator of angle instability for the set of operating points. In an embodiment in which machine-learning model 355 has been trained to determine the indicator of angle instability at each of the plurality of buses, subprocess 730 may execute machine-learning model 355 to determine the indicator of angle instability at each of at least a subset, and preferably all, of the plurality of buses for the set of operating points. In this case, subprocess 730 may determine a global indicator of angle instability based on the determined indicators of angle instability at the plurality of buses. It should be understood that the indicators of angle instability at each bus will indicate whether or not that bus is angularly unstable, whereas the global indicator of angle instability will indicate whether or not the power network, as a whole, is angularly unstable. The global indicator of stability may be a maximum of the bus-level indicators of angle instability (i.e., the maximum indicator of angle instability across all of the plurality of buses), an average of the bus-level indicators of angle instability, or any other aggregation of the bus-level indicators of angle instability. In an embodiment that will be discussed in greater detail elsewhere herein, the bus-level and/or global indicators of angle instability may comprise a quantity derived from a difference between a voltage angle trajectory and a post-fault steady-state voltage angle, such as the log of the root mean square error (RMSE) for the post-fault voltage angle trajectory.

In an embodiment in which there are a plurality of contingencies defined in subprocess 720, subprocess 730 may comprise or consist of a plurality of subprocesses 730A, 730B, ..., 730N. In this case, each subprocess 730 represents an execution of machine-learning model 355 for one pairing of the operating point with a different one of the plurality of contingencies. Subprocesses 730 may be executed in parallel, serially, or both in parallel and serially (e.g., as serial batches, in which each subprocess 730 is executed in parallel with the other subprocesses 730 in the same batch). The result of each of subprocesses 730A, 730B, ..., 730N may be a global indicator of angle instability for the operating point and respective contingency.

In an embodiment, the bus-level and/or global indicators of angle instability do not represent a dynamic security assessment of angle instability, and therefore, are not used as a substitute for conventional dynamic security assessment. Rather, these indicators represent the risk of angle instability. In other words, machine-learning model 355 predicts a risk of instability, rather than instability itself.

Each subprocess 730 may be associated with a subprocess 740 that determines whether or not there is a risk of instability in the power network, based on the global indicator of angle instability, output by the corresponding subprocess 730. For instance, subprocess 730A is associated with subprocess 740A, subprocess 730B is associated with subprocess 740B, ..., and subprocess 730N is associated with subprocess 740N. In particular, subprocess 740 may determine whether or not the global indicator of angle instability satisfies one or more criteria, such as one or more thresholds. For example, in an embodiment in which a binary classifier is used, the power network, given the operating point and respective contingency, may be classified into an unstable class when the global indicator of angle instability satisfies (e.g., is greater than or equal to) a predefined threshold, and a stable class when the global indicator of angle instability does not satisfy (e.g., is less than) the predefined threshold. In this case, subprocess 740 may determine that the power network is at risk of instability when the power network is classified into the unstable class, and determine that the power network is not at risk of instability when the power network is classified into the stable class. As another example, in an embodiment in which a ternary classifier is used, the power network, given the operating point and respective contingency, may be classified into an unstable class when the global indicator of angle instability satisfies (e.g., is greater than or equal to) a first predefined threshold, a stable class when the global indicator of angle instability does not satisfy (e.g., is less than) a second predefined threshold, and an unclear class when the global indicator of angle instability does not satisfy (e.g., is less than) the first predefined threshold but does satisfy (e.g., is greater than or equal to) the second predefined threshold. In this case, subprocess 740 may determine that the power network is at risk of instability when the power network is classified into the unstable class, determine that the power network is not at risk of instability when the power network is classified into the stable class, and, when the power network is classified into the unclear class, either determine that the power network is at risk of instability (e.g., in the preferred embodiment), determine that the power network is not at risk of instability (e.g., in the non-preferred embodiment), or perform further analysis to determine the risk of instability. When determining that the power network is at risk of instability (i.e., "Yes" in subprocess 740), operation process 700 may perform a dynamic security assessment 750 for the given operating point and contingency. Otherwise, when determining that the power risk is not at risk of instability (i.e., "No" in subprocess 740), operation process 700 may end for the given operating point and contingency.

In essence, subprocesses 740 determines whether or not to execute dynamic security assessment(s) 750 for a set of operating points based on the indicators of angle instability determined for at least a subset, and preferably all, of the plurality of buses. In addition, process 700 may determine a portion of the power network that is at risk of being unstable based on the determined indicators of angle instability for at least a subset of the plurality of buses. For instance, in an embodiment in which indicators of angle instability are determined by machine-learning model 355 at the bus level, subprocess 740 may determine that each bus, for which the determined bus-level indicator of angle instability satisfies one or more criteria (e.g., satisfies the predefined threshold in binary classification, or satisfies the first predefined threshold in ternary classification), is at risk of angle instability. In this case, the portion of the power network comprising or consisting of those bus(es), for which the determined bus-level indicator of angle instability satisfies the one or more criteria, may be determined to be at risk of being unstable.

It should be understood that, if none of the subprocesses 730A, 730B, ..., 730N output an indicator of angle instability that represents a risk of angle instability, as determined by the respective subprocesses 740A, 740B, ..., 740N, process 700 will end. In this case, the need for a dynamic security assessment 750 is avoided entirely. Since machine-learning model 355 can be executed much faster than a full dynamic security assessment 750, computational time will be significantly reduced. On the other hand, for each of the subprocesses 730 that outputs an indicator of angle instability that represents a risk of angle instability, a respective dynamic security assessment 750 is performed. Notably, many of subprocesses 730 will not output an indicator of angle instability that represents a risk of angle instability, such that no dynamic security assessment 750 must be performed for the corresponding operating point and contingency. Thus, even in this case, the number of dynamic security assessments 750 that must be performed is substantially reduced, such that the overall computational time is significantly reduced. In other words, operation process 700 significantly reduces the number of dynamic security assessments 750 that must be performed.

For each pairing of the operating point with a contingency that is determined, by the corresponding subprocess 740, to be at risk of instability, a dynamic security assessment 750 is performed to determine whether or not the power network is unstable. For instance, dynamic security assessment 750A is executed when subprocess 740A determines that a risk of instability exists, dynamic security assessment 750B is executed when subprocess 740B determines that a risk of instability exists, ..., and dynamic security assessment 750N is executed when subprocess 740N determines that a risk of instability exists. In other words, if machine-learning model 355 is unable to reliably determine that the power network is not at risk of instability, for a given operating point and contingency, dynamic security assessment 750 is performed.

Any suitable technique may be used for dynamic security assessment 750. In general, dynamic security assessment 750 evaluates the stability and reliability of the power network under the operating conditions, represented by the given operating point, and the disturbance, represented by the given contingency, to identify instabilities, such as voltage collapse, frequency deviations, system oscillations, or the like, and provide insights into the power network's ability to withstand and recover from the given contingency. In an embodiment, each dynamic security assessment 750 comprises a time domain DSA simulation, using a system model of the power network (e.g., within model(s) 350). In time domain DSA simulations, the behavior of the power network is simulated over time, after occurrence of the contingency, to assess transient stability, and one or more stability metrics (e.g., rotor angle stability) are derived from the simulation.

Assuming that at least one dynamic security assessment 750 is executed, subprocess 760 may aggregate the results of all of dynamic security assessments 750 into a determination of whether or not the power network is unstable for the given operating point. Any suitable technique may be used to aggregate the results of the executed dynamic security assessments 750. As a basic example, the aggregation may comprise determining that the power network is unstable for the operating point when at least one dynamic security assessment 750 determines that the power network is unstable. As another example, the aggregation may comprise determining that the power network is unstable for the operating point when a certain number or percentage of dynamic security assessments 750 or contingencies result in a determination that the power network is unstable. Otherwise, subprocess 760 may determine that the power network is stable for the operating point.

Subprocess 770 may determine whether or not the power network is unstable for the operating point based on the aggregation of dynamic security assessments 750, performed in subprocess 760. When determining that the power network is unstable for the operating point (i.e., "Yes" in subprocess 770), process 700 may proceed to subprocess 780. Otherwise, when determining that the power network is stable for the operating point (i.e., "No" in subprocess 770), process 700 may end.

Subprocess 780 may perform one or more mitigating actions, to prevent or correct instability in the power network. For example, after executing dynamic security assessment 750 for the set of operating points, when dynamic security assessment 750 determines that the power network is unstable given the set of operating points, the mitigating action(s) may comprise controlling one or more components of the power network to mitigate instability in the power network. This control may comprise shedding one or more loads (e.g., preemptively), re-dispatching one or more power generators, tripping one or more power generators, reconfiguring a topology of the power network, adjusting one or more setpoints of one or more components (e.g., tap settings of one or more transformers), and/or the like.

Process 700 may be performed periodically for the power network of a target system 140. In each period, process 700 may be performed once for a single operating point or, in a preferred embodiment, iteratively (e.g., in parallel and/or serially) for each of a plurality of operating points, for example, representing different variations (e.g., in operating conditions, topological configurations, etc.). In a periodic embodiment, process 700 may be performed for one or a plurality of operating points after the expiration of each of a plurality of a fixed time interval. The fixed time interval may be set according to one or more applicable design factors. As non-limiting examples, the fixed time interval may be one minute, ten minutes, fifteen minutes, thirty minutes, one hour, two or more hours, twelve hours, twenty four hours, two or more days, or the like.

As mentioned above, the set of operating point(s) that are evaluated in each period in which process 700 is executed may comprise a current set of operating point(s), representing the operating point(s) at a current time. Alternatively or additionally, the set of operating point(s) that are evaluated in each period in which process 700 is executed may comprise a forecasted set of operating point(s), representing the operating point(s) for a future time. In this latter case, the forecasted set of operating point(s) may represent a forecast that is a fixed time period in the future. The fixed time period may be set according to one or more applicable design factors, and represents for how far into the future the dynamic security assessment is to be performed. As non-limiting examples, the fixed time period may be one minute, ten minutes, fifteen minutes, thirty minutes, one hour, two or more hours, twelve hours, twenty four hours, two or more days, or the like. In this case, process 700 is executed for a future time point, represented by the end of the fixed time period, that slides at a time step equal to the fixed time interval.

### 6. Example Indicator of Angle Instability

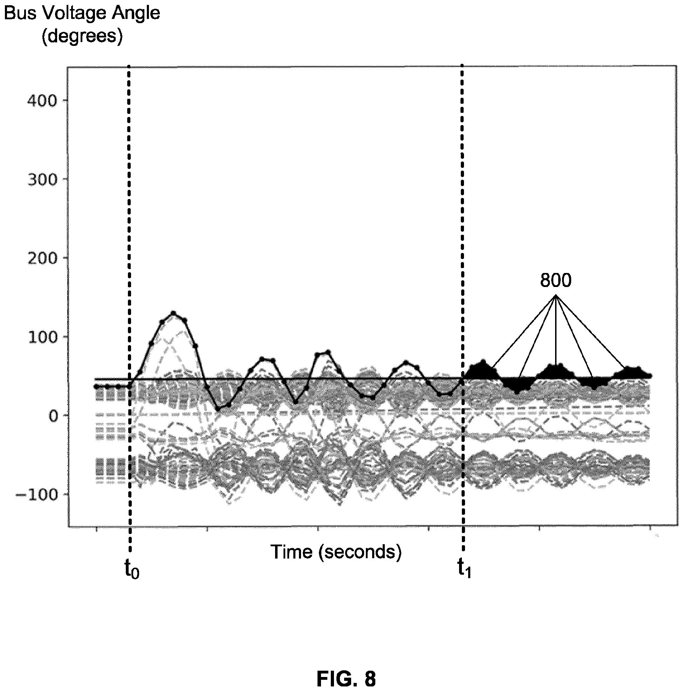

FIG. 8 illustrates an example indicator of angle instability, according to an embodiment. In an embodiment, instead of using rotor angle trajectories to train machine-learning model 355, an indicator of angle instability that is defined for all buses in the power network is used. In the illustrated example, the indicator of angle instability is based on bus voltage angles. In particular, the indicator of angle instability is depicted on a plot of bus voltage angle over time for a plurality of buses. As discussed above, the indicator of angle instability may be used as a criterion to determine the risk of instability in a power network. In this example, the contingency is a fault that occurs at time *t*₀, and evaluation begins at time *t*₁ ≥ *t*₀. Notably, before the fault at time t₀, the bus voltage angles are constant. At the time of the fault at time *t*₀, the bus voltage angles begin oscillating due to transients. These oscillations dampen over time until a post-fault steady state is reached at time *t*₁, from which time the evaluation by machine-learning model 355 may begin. In this example, two synchronous machines become rotor angle unstable. As a result, some of the bus voltage angles show a significantly higher and more irregular oscillation around their post-fault equilibriums, including the buses to which the two unstable synchronous machines are connected.

In an embodiment, the indicator of angle instability comprises or consists of a quantity derived from a difference between the voltage angle trajectory and the post-fault steady-state voltage angle. In a particular embodiment, this quantity comprises or consists of a logarithm of the post-fault root mean square error (RMSE), also referred to herein as "log post-fault root mean square error," for each of the plurality of buses. In other words, the integral of the squared difference, of the bus voltage angle from the bus voltage angle's post-fault stable equilibrium, may be computed and logarithmized. For example, the indicator of angle instability for a bus may be calculated for a time interval [*t*₁, *t_{end}*] as: 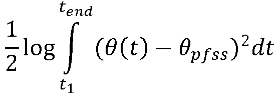 wherein *θ* is a voltage angle for the bus, *θ_{pfss}* is the post-fault steady-state voltage angle for the bus, and t is time. Post-fault steady-state voltage angle *θ_{pfss}* may be computed using standard power-flow analysis (e.g., by solving a load-flow problem). In the above embodiment, an integral is computed over area 800 for an example bus, and then the log of the resulting integral is taken to obtain a numerical rate of instability at the respective bus. The start time *t*₁ for the calculation may be chosen such that all mild transients, after the fault time *t*₀, are expected to already be within the stabilizing phase (e.g., *t*₁ = 5 seconds). The end time *t_{end}* may be chosen to provide a reasonable duration for the calculation (e.g., 10 seconds).

In some cases, the post-fault steady-state voltage angle *θ_{pfss}* may not exist for one or more buses. When generating the training dataset (e.g., in subprocess 410 of process 400), these cases may be excluded from the training dataset, or alternatively, the missing post-fault steady-state voltage angles may be replaced with an arbitrary high value that indicates instability. During the operation phase, if the load-flow problem cannot be solved, such that the log post-fault root mean square error cannot be calculated for all buses, the power network may be classified as unstable.

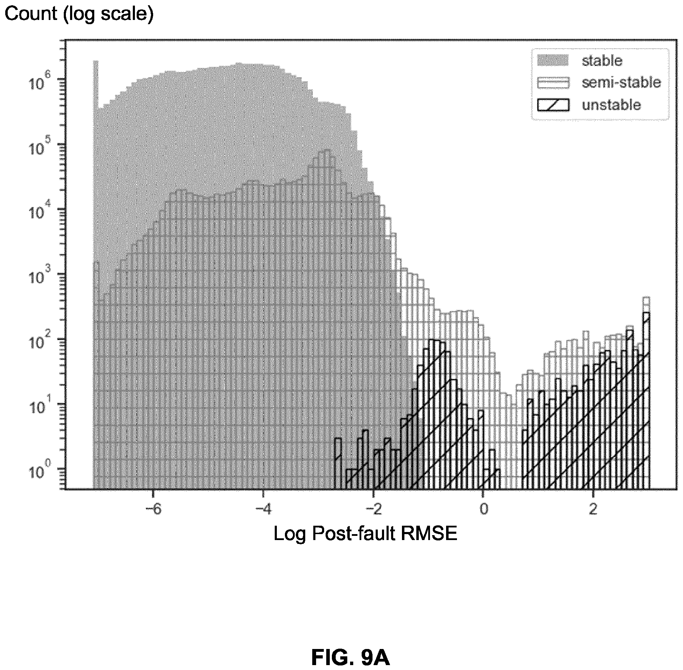

FIG. 9A illustrates a histogram of the log post-fault root mean square error, as the bus-level indicator of angle instability, for each of the plurality of buses of a power network, over an example simulation database. It can be observed that there is a satisfactory separation between the stable and unstable cases. If a particular simulation has a synchronous machine that is rotor-angle unstable, the bus(es) that are associated with this unstable synchronous machine are considered unstable, and all buses which are not associated with this unstable synchronous machine are considered semi-stable. Among the semi-stable buses, there are both low and high values of the log post-fault root mean square error.

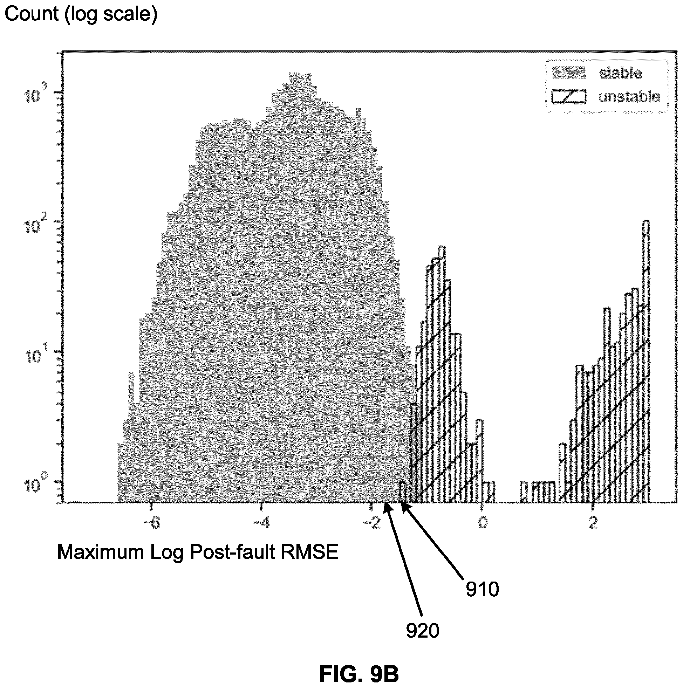

FIG. 9B illustrates a histogram of the log post-fault root mean square error, as the global indicator of angle instability, for the power network, over an example simulation database. Again, there is very good separation between the stable and unstable classes. This histogram is used to demonstrate how the predefined threshold that divides the unstable class from either the stable class (i.e., in binary classification) or the unclear class (e.g., in ternary classification) may be determined. In particular, the predefined threshold may be set according to an extreme of the global indicator of angle instability during one or more simulations over the simulation database. In a preferred embodiment, the predefined threshold is set according to both the extreme of the global indicator of angle instability during the simulation(s) and a buffer amount, such that the determination of whether or not to execute the dynamic security assessment is a one-sided prediction that avoids false negatives. For example, in an embodiment in which the global indicator of angle instability is log post-fault root mean square error, the buffer amount may be subtracted from the minimum value 910 of the log post-fault root mean square error for the unstable class, to produce the conservative predefined threshold 920. The safety buffer may be sized to ensure that the value of the log post-fault root mean square error is never below predefined threshold 920 when the power network is unstable. In this manner, the predefined threshold 920 can be selected to eliminate false negatives (i.e., in which the power network is incorrectly classified as stable), while minimizing false positives (i.e., in which the power network is incorrectly classified as unstable), at the cost of a small loss in accuracy (e.g., 0.5-1.0%).

A comparison of FIGS. 9A and 9B reveals that, for unstable simulations, bus voltage angles, beyond just those associated with unstable synchronous machines, will exhibit high values of log post-fault root mean square error. Clustering the buses that exhibit high values of log post-fault root mean square error can also be used to identify the portion of the power network that is at risk of being unstable (i.e., at risk of separating or falling out of step from the main power system).

While log post-fault root mean square error is used as the indicator of angle instability in the preferred embodiment, other criteria may be used instead of or in addition to log post-fault root mean square error. For instance, after a fault, the stable voltage angle trajectory will oscillate around the post-fault steady-state voltage angle for the respective bus, in an order of magnitude of 1 hertz, before damping out after several seconds or tens of seconds. The amplitude, frequency, and/or damping of these oscillations can be identified through a curve-fitting approach and used as a criterion (e.g., a multi-dimensional criterion). For example, the profile of the oscillation of the voltage angle at each bus may be compared to a reference curve, in terms of each of amplitude, frequency, and/or damping, and when the profile matches the reference curve(s), the bus may be classified into the unstable class.

### 7. Example Machine-Learning Model

Machine-learning model 355 may utilize any suitable architecture. For example, machine-learning model 355 could comprise a fully connected artificial neural network (ANN), convolutional neural network (CNN), graph neural network (GNN), recurrent neural network (RNN) with long short-term memory (LSTM), attention network, transformer, or the like. However, each of these architectures has disadvantages. For example, a fully connected network does not scale well. Scalability is important, since the nodes (e.g., buses) of the power network may number in the thousands, tens of thousands, hundreds of thousands, or more. While a convolutional neural network is scalable and represents mature technology, there is no natural mapping of the neural network to a power network, and some properties (e.g., locality, translation invariance, etc.) of convolutional operators are not desirable for a power network. A graph neural network is scalable and can naturally map the neural network to the power network, but performs poorly empirically. While a recurrent neural network is useful for time series, it is not appropriate for pre-screening the risk of instability. Attention networks and transformers are scalable, powerful, and versatile, but require a huge volume of training data.

In a preferred embodiment, machine-learning model 355 comprises a message-passing neural network. In this case, each of the plurality of training records in the training dataset, generated in subprocess 410 of process 400 and used to train machine-learning model 355 in subprocess 420 of process 400, may comprise a nodal tensor that has a nodal dimension, representing the plurality of buses in the power network, and a feature dimension, representing the value of each of the parameter(s) (e.g., complex power, complex voltage, etc.) at each of the plurality of buses in the power network. Suitable embodiments of a message-passing network are described in detail in International Patent Application No. PCT/EP2024/076123, filed on September 18, 2024, which is hereby incorporated herein by reference as if set forth in full.

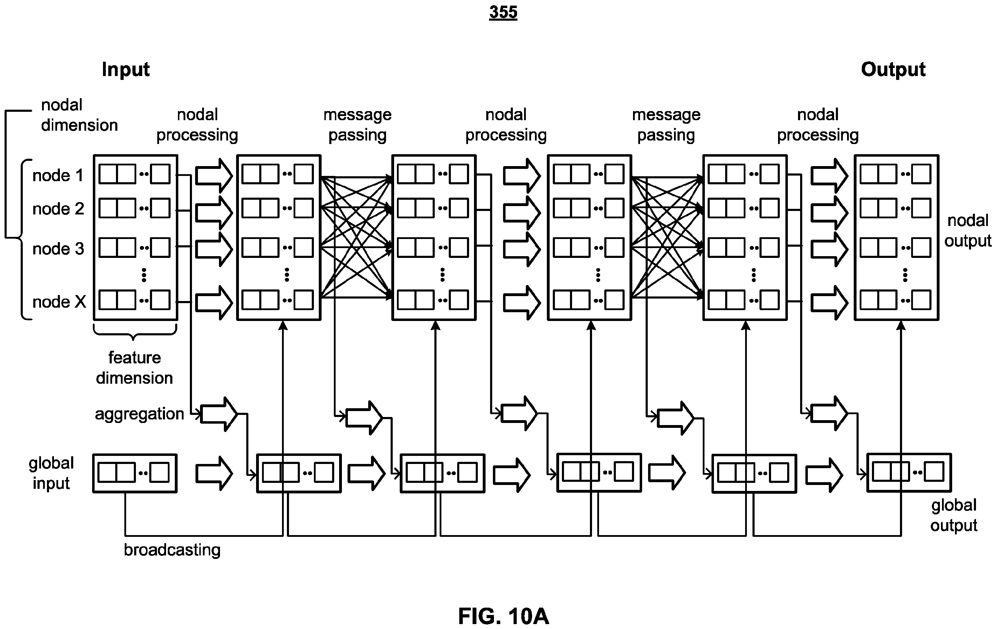

FIG. 10A illustrates an example architecture of a message-passing neural network, according to an embodiment of machine-learning model 355. As illustrated, there is a nodal input and a global input. The nodal input comprises a nodal tensor having a nodal dimension, representing all of the plurality of buses in the power network, and a feature dimension, representing the value of each of the parameters at each of the plurality of buses in the power network. The global input comprises a global feature vector, having a feature dimension, representing the value of each of one or more global parameters. Thus, in addition to processing data at the bus level, the message-passing neural network also processes data at the global level. Communication between the bus-level data and the global-level data may be implemented through steps of aggregation and broadcasting. For instance, in order to obtain a global indicator of angle instability of the entire power network, conventional max-pooling may be used to aggregate the bus-level indicators of angle instability for the plurality of buses in the power network. In addition, global data, derived from the global input, may be broadcast from the global layers to the nodal layers.

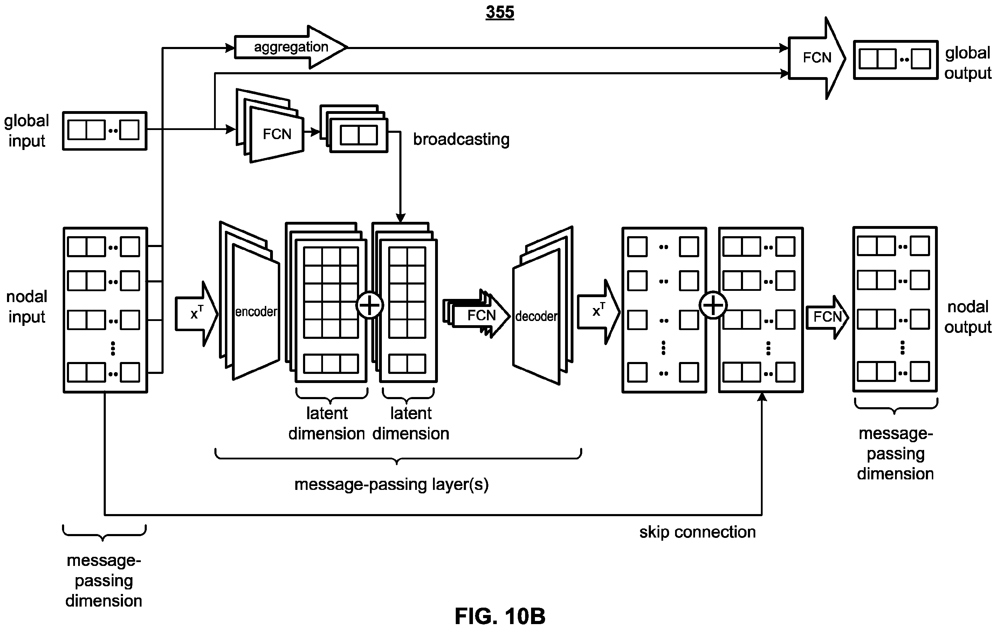

FIG. 10B illustrates an example architecture of a message-passing neural network, according to an embodiment of machine-learning model 355. Message-passing may be realized through an encoder-decoder sequence that maps data at all of the plurality of buses into a latent space. In particular, the message-passing dimension is compressed into a latent dimension by the encoder, and then decompressed back into the message-passing dimension by the decoder. A plurality of parallel message-passing layers may be implemented (e.g., three message-passing layers in the illustrated example). The global input may broadcast to the latent space, and aggregated with the nodal input to produce a global output.

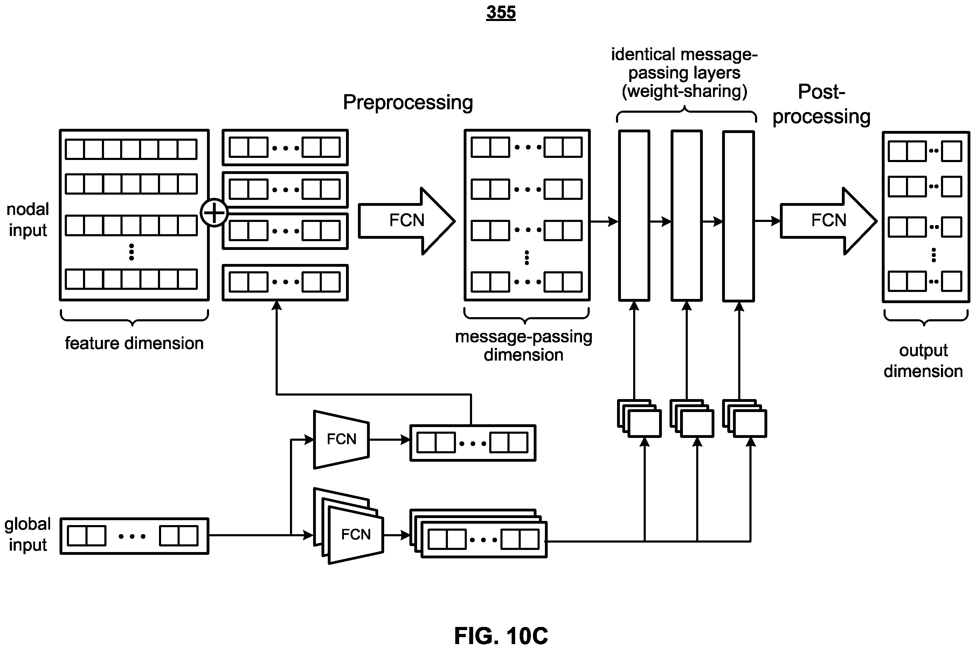

FIG. 10C illustrates an example architecture of a message-passing neural network, according to an embodiment of machine-learning model 355. In this example, three identical serially arranged message-passing layers are implemented, using weight-sharing. It should be understood that each message-passing layer may comprise the encoder-decoder sequence illustrated in FIG. 10B, which may potentially comprise a plurality of parallel message-passing layers as illustrated in FIG. 10B.

### 8. Example Embodiment

Rotor angle stability is a key criterion of dynamic stability in power networks. In an embodiment, the simulated trajectories of bus voltage angles are used to assess the risk of rotor angle instability in a power network, as opposed to the use of rotor angles themselves. In particular, a machine-learning model 355, which may comprise or consist of a message-passing neural network, may be trained to determine an indicator of angle instability for each of a plurality of buses in the power network. From these indicators of angle instability (e.g., voltage angle instability) at the buses, a global indicator of whether or not the power network exhibits rotor angle instability may be determined. This global indicator of angle instability may be used to determine whether or not to run a dynamic security assessment 750. In addition, the portion(s) of the power network containing the unstable synchronous machine(s) may be determined based on the buses for which the bus-level indicators of angle instability indicate angle instability.

In summary, the risk of rotor angle instability in a power network can be assessed using bus voltage angles, which are more favorable as a training signal for machine-learning model 355. In particular, bus voltage angles are available at every bus in the power network, as opposed to rotor angle which is only available at those buses with power generators. In modern power networks, only about 20-30% of buses are connected to power generators, and this percentage will likely decrease in future power networks, as they become dominated by power electronics. Advantageously, instead of relying on signals from this small percentage of buses, machine-learning model 355 may utilize signals from all of the buses (e.g., 100% of the buses).

In an embodiment, a predefined threshold 920 is defined to produce a one-sided predictor (e.g., comprising subprocesses 730 and 740 of process 700) that prevents false negatives. In this case, it should be understood that the predictor is slightly biased towards over-predicting rotor angle instability. Thus, any power network that is determined to be stable by the predictor will, in fact, be stable, whereas a power network that is determined to be unstable by the predictor will have a slight chance of actually being stable.

Embodiments are primarily described herein as predicting rotor angle instability, which is only available as a local quantity for buses connected to synchronous machines in a power network. While an alternative indicator of stability may be predicted instead, the benefits of disclosed embodiments will generally accrue to any indicator of instability, like rotor angle instability, that is related to local quantities (e.g., voltage angle) at every node (e.g., bus) in the power network, but which is not itself available as a local quantity at every node in the power network. For example, disclosed embodiments could be applied to converter-dominated power networks to predict the stability of certain converters (e.g., large renewable energy sources) based on local quantities available at every bus.

The above description of the disclosed embodiments is provided to enable any person skilled in the art to make or use the invention. Various modifications to these embodiments will be readily apparent to those skilled in the art, and the general principles described herein can be applied to other embodiments without departing from the spirit or scope of the invention. Thus, it is to be understood that the description and drawings presented herein represent a presently preferred embodiment of the invention and are therefore representative of the subject matter which is broadly contemplated by the present invention. It is further understood that the scope of the present invention fully encompasses other embodiments that may become obvious to those skilled in the art and that the scope of the present invention is accordingly not limited.

As used herein, the terms "comprising," "comprise," and "comprises" are open-ended. For instance, "A comprises B" means that A may include either: (i) only B; or (ii) B in combination with one or a plurality, and potentially any number, of other components. In contrast, the terms "consisting of," "consist of," and "consists of" are closed-ended. For instance, "A consists of B" means that A only includes B with no other component in the same context.

Combinations, described herein, such as "at least one of A, B, or C," "one or more of A, B, or C," "at least one of A, B, and C," "one or more of A, B, and C," and "A, B, C, or any combination thereof" include any combination of A, B, and/or C, and may include multiples of A, multiples of B, or multiples of C. Specifically, combinations such as "at least one of A, B, or C," "one or more of A, B, or C," "at least one of A, B, and C," "one or more of A, B, and C," and "A, B, C, or any combination thereof" may be A only, B only, C only, A and B, A and C, B and C, or A and B and C, and any such combination may contain one or more members of its constituents A, B, and/or C. For example, a combination of A and B may comprise one A and multiple B's, multiple A's and one B, or multiple A's and multiple B's

## Claims

1. A method of facilitating angle stability in a power network, the method comprising using at least one hardware processor to:
during a training phase,
generate a training dataset that comprises a plurality of training records, wherein each of the plurality of training records corresponds to an operating point and comprises, for each of a plurality of buses in the power network, a value of each of one or more parameters at that bus and a label indicating whether that bus is angularly stable or unstable for the corresponding operating point, wherein the training dataset includes one or more training records for each of a plurality of operating points with one or more contingencies, and
use the training dataset to train a machine-learning model to output an indicator of angle instability at each of at least a subset of the plurality of buses; and
during an operation phase, for each of one or more sets of operating points for the power network, execute the machine-learning model to determine the indicator of angle instability at each of the at least a subset of the plurality of buses for the set of operating points, wherein each of the one or more sets of operating points comprises one or more variations and/or one or more contingencies that are relevant to assessing the angle instability in the power network.

2. The method of Claim 1, further comprising using the at least one hardware processor to, during the operation phase, for each of the one or more sets of operating points, determine whether or not to execute a dynamic security assessment for the set of operating points based on the determined indicators of angle instability at the at least a subset of the plurality of buses.

3. The method of Claim 2, further comprising using the at least one hardware processor to, when determining to execute the dynamic security assessment for the set of operating points, determine a portion of the power network that is at risk of being unstable based on the determined indicators of angle instability for at least a subset of the plurality of buses.

4. The method of any one of the preceding claims, wherein the one or more parameters comprise one or more of complex power, complex voltage, or a status of at least one adjacent line.

5. The method of any one of the preceding claims, wherein the plurality of buses comprises all buses in the power network, and/or
wherein the indicator of angle instability is an indicator of voltage angle instability.

6. The method of any one of the preceding claims, wherein the indicator of angle instability comprises a quantity derived from a difference between a voltage angle trajectory and a post-fault steady-state voltage angle.

7. The method of Claim 6, wherein the quantity comprises a logarithm of the post-fault root mean square error for each of the plurality of buses, calculated for a time interval [*t*₁, *t_{end}*] as: 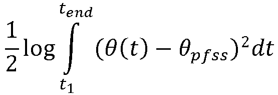 wherein *θ* is a voltage angle for the bus, *8_{pfSS}* is a post-fault steady-state voltage angle for the bus, and t is time.

8. The method of any one of the preceding claims, further comprising determining a global indicator of angle instability based on the determined indicators of angle instability at the plurality of buses, and wherein determining whether or not to execute the dynamic security assessment comprises:
determining to execute the dynamic security assessment for the set of operating points when the determined global indicator of angle instability satisfies a predefined threshold; and
determining not to execute the dynamic security assessment for the set of operating points when the determined global indicator of angle instability does not satisfy the predefined threshold, and preferably
further comprising using the at least one hardware processor to, when determining to execute the dynamic security assessment for the set of operating points, execute the dynamic security assessment to determine whether or not the power network is unstable given the set of operating points.

9. The method of Claim 8, further comprising using the at least one hardware processor to, after executing the dynamic security assessment for the set of operating points, when the dynamic security assessment determines that the power network is unstable given the set of operating points, control one or more components of the power network to mitigate instability in the power network and preferably
wherein controlling one or more components of the power network to mitigate instability in the power network comprises one or more of shedding one or more loads, re-dispatching one or more power generators, tripping one or more power generators, reconfiguring a topology of the power network, or adjusting one or more setpoints of the one or more components.

10. The method of Claim 8 or 9, wherein the predefined threshold is set according to an extreme of the global indicator of angle instability during one or more simulations, and preferably
wherein the predefined threshold is set according to both the extreme of the global indicator of angle instability during the one or more simulations and a buffer amount, such that the determination of whether or not to execute the dynamic security assessment is a one-sided prediction that avoids false negatives.

11. The method of any one of the preceding claims, wherein the machine-learning model comprises a message-passing neural network, and wherein each of the plurality of training records comprises a nodal tensor that has a nodal dimension, representing the plurality of buses, and a feature dimension, representing the value of each of the one or more parameters at each of the plurality of buses.

12. The method of any one of the preceding claims, wherein the one or more sets of operating points comprise a current set of operating points, representing the operating points at a current time, and/or
wherein the one or more sets of operating points comprise a forecasted set of operating points, representing the operating points forecasted for a future time.

13. A system comprising:
at least one hardware processor; and
software configured to, when executed by the at least one hardware processor, perform the method of any one of the preceding claims.

14. A computer program comprising instructions that, when executed by a computer, cause the computer to perform the method of any one of Claims 1 through 12.

15. A non-transitory computer-readable medium having instructions stored thereon, wherein the instructions, when executed by a processor, cause the processor to perform the method of any one of Claims 1 through 12.
